Europäisches Patentamt

European Patent Office

Office européen des brevets

(11) Publication number: **0 234 605**
**B1**

(12) **EUROPEAN PATENT SPECIFICATION**

(45) Date of publication of patent specification: 04.07.90

(51) Int. Cl.⁵: **B 65 B 1/32, G 01 G 13/29**

(21) Application number: 87200027.8

(22) Date of filing: 12.01.87

(54) Net weight weighing device for bagging machines.

(30) Priority: 24.01.86 IT 1917286

(43) Date of publication of application:
02.09.87 Bulletin 87/36

(45) Publication of the grant of the patent:
04.07.90 Bulletin 90/27

(84) Designated Contracting States:
DE ES FR GB IT

(56) References cited:
EP-A-0 080 826
FR-A-2 094 168
US-A-3 977 483

(73) Proprietor: CAR-VENTOMATIC S.p.A.
Via G.Marconi, 20
I-24030 Valbrembo (BG) (IT)

(72) Inventor: Moltrasio, Mario
Corso Vittorio Emanuele, 34
I-24100 Bergamo (IT)

(74) Representative: de Pasquale, Carlo
Via Carlo Ravizza 53
I-20149 Milano (IT)

Courier Press, Leamington Spa, England.

## Description

It is known that there are two kinds of bagging machines, namely for granular materials, with net weight or gross weight delivery. Gross weight bagging machines introduce the material in the bag, checking continuously its weight so as to stop loading when the desired gross weight (bag plus material) is reached.

In the prior art a number of weighing devices belonging to this category of machines are disclosed.

EP—A—0 080 826 shows a system in which the preset weight indicated in an electro-mechanical setting unit is corrected at the end of the weighing operation by means of a comparator and a feedback unit comparing the weight of the filled bag, after closure of the filling valve, thus not affected by dynamic forces, with the preset weight and makes a correction of the present weight.

FR—A—2 094 168 shows an electronic weighing system in which an extensometer joke and the fixed point of a bar subjected to the flexural action of the bag weight, are connected in a comparator of the bending stress acting on the valve for feeding material to the bag, firstly switching said valve to a reduced output and then closing the valve a short time before the bag reaches the preset weight value.

US—A—3 977 483 shows a system in which the correct weight is obtained by adding a missing quantity to the willingly underfilled containers, weighed on an electronic weighing device signalling the weight to a computer which weighs said missing quantity in a separate device and said missing quantity is caused to fall in the suitably guided container which is placed under said device.

In the net weight bagging machines on the contrary the material is introduced in the container of a weighing machine until the desired weight is reached. The container is then discharged in a hopper, under which there is a bagging machine providing for transfer of material from the hopper to the bag.

Whenever possible, gross weight bagging machines are preferred because of their simplicity and lower height, but they cannot be used in every case.

There are cases in which one must use net weight bagging machines, e.g.:

—when the bag must be shaken or vibrated during loading in order to compact the incoming material and better fill the bag, as a vibrating device cannot be applied to a gross weight bagging machine because it would disturb the weighing operation and therefore it is necessary to use a net weight machine where the bagging machine is completely separated from the weighing device;

—or when in the gross weight bagging machines, the path from the interceptor of flow of material to the bag applied to weighing system for structural reasons is so long, that the weight of the material flowing in said path, being no more under control having passed the interceptor but not yet reached the weighing device, is great and the order of magnitude of a possible error existing in it may be higher than an admissible one.

Therefore there are many cases in which use of the net weight bagging machines is dictated by a technical necessity; however their installation in a plant has considerable inconveniences because of their greater height in comparison with a gross weight machine.

A net weight equipment generally comprises a weighing machine provided with a weighing container and a discharge valve, a hopper where the weighed material is transferred, and a bagging machine.

The present invention relates to a net weight weighing device for bagging machines as specified in Claim 1, allowing to reduce considerably the height of such equipment because the hopper adapted to contain the weighed material and arranged between weighing and bagging machine is dispensed with.

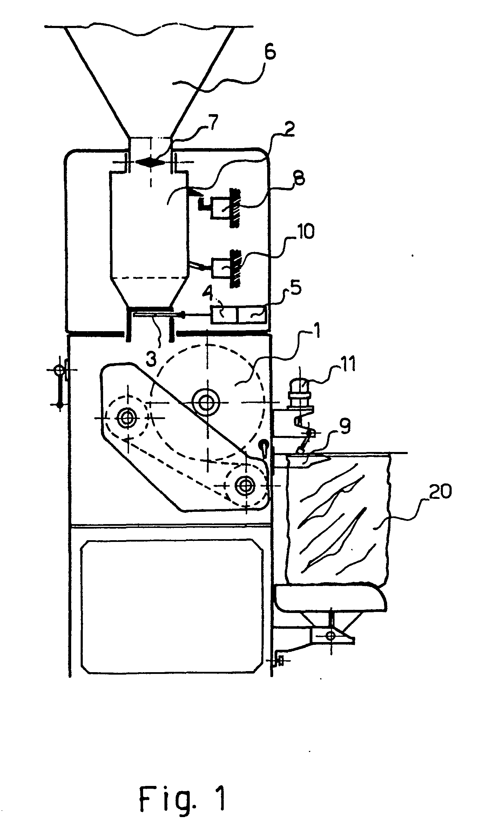

The invention will be better understood with the following description of an embodiment given as a non limiting example only and illustrated in the accompanying drawing in which Fig. 1 is a sectional lateral view of the equipment.

With reference now to Fig. 1, the weighing equipment according to the present invention comprises a bagging machine 1 which in the illustrative example is of the throw belt type, above which an electronic weighing machine 10 is directly arranged, provided with a container 2 for the material to be bagged.

At the outlet of the container 2 of the weighing machine and above the bagging machine 1 there is an interceptor device 3 with two operative positions, e.g. of the guillotine type, controlled by two pneumatic cylinders 4 and 5 serially arranged so as to obtain a partial closure of the outlet by actuating only one cylinder, and total closure of said outlet by actuating both cylinders at the same time. However all existing types of intercepting devices may be used for carrying out the invention, such as screw, belt, vibrating extractors and the like.

Above the container 2 of the weighing machine, namely on the discharge mouth of the silo 6, there is an intercepting member such as a throttle 7 which may actually have only two positions, i.e. fully open and fully closed, the extra weight being not influential for its operation. This intercepting member might also be a guillotine shutter, a screw, a vibrating device, a cell drum metering device or any other suitable device.

All these devices are controlled by a microprocessor, not shown in the drawing, programmed so as to obtain the following operations:

—Opening of the intercepting member 7 arranged above the container 2 of the weighing machine, so that the material passes from the silo 6 to the underlying container 2 until its weight, which is continuously controlled by the electronic weighing system with its loading cell 8, reached a value which was introduced beforehand in the microprocessor storage, corresponding approximately to the amount required to fill the container, the volume of which was chosen so as to contain a quantity of material having a weight equal to that to be introduced in the bag, plus a certain excess quantity.

—Closure of the intercepting member 7 when said preset weight is reached. Another possibility is to apply a level indicator close to the upper edge of the container 2 so that the incoming material when reaching the level indicator causes a pulse closing the intercepting device. The actual weight of the material introduced in the container 2 is then detected and stored by the system.

—Opening of the interceptor device or valve 3 arranged at the outlet of the container 2 of the weighing machine, occurring only upon receiving a consent signal advising that a bag 20 is applied on the nozzle 9 of the bagging machine 1, so that the material can be discharged at the maximum output. The maximum output value is designed so as not to exceed the output of the bagging machine, in order to be sure that the discharged material is handled by the bagging machine, so as to avoid clogging obstructions. During this operation the weighing device is continuously controlling the decreasing weight of the material in the container 2 and is signalling this to the microprocessor.

—Closure of the interceptor device 3 in the reduced flow discharge position, this taking place when the difference of weight between that actually contained in the container 2 at the beginning and that existing in the container 2 at the moment, is lower for a selected quantity than the amount to be introduced in the bag now being handled.

—Total closure of the interceptor device 3 occurring when the difference with the weight of material already introduced in the bag 20 is equal to the weight to be filled in the bag less the weight of material inevitably passing during the phase of total closure of the interceptor device.

For a better understanding of the invention, a numerical example of operation of the system will now be given.

The cycle starts with opening of the throttle 7 arranged at the bottom of the loading silo 6 and then its closure after having filled the container 2 of the weighing machine 10, controlled by a weight or volume control system. Let assume that the weighing system measures a value of 54.35 kg and stores this value.

After having applied the bag 20 on the nozzle 9 of the bagging machine and blocked the bag (which has to be filled with 50 kg of material) e.g. by means of the magnetic locking device 11, the consent is given to the system for the full opening of the valve 3, so that during this stage the material comes out from the container 2 and fills the bag 20 to the maximum load capacity, while the weighing machine controls continuously the weight of material decreasingly remaining in the container 2, signalling it to the microprocessor.

If it is necessary, to have a sufficiently exact weight, that the last 4 kg of material are filled slowly, the programme stored in the microprocessor will cause the partial closure of the valve 3 and shift to reduced flow, when the weight of the material in the container 2 diminished of 46 kg, i.e. in the container 2 there are still 54.35−46=8.35 kg. Thus discharge of material will go on slowly.

Assuming now that with that kind of material, during the phase of shifting the valve 3 from reduced flow position to full closure position, 250 g of material are still passing through the valve, this condition is stored in the microprocessor, so that the full closure command will be given to the interceptor device when 49.75 kg of material came out from the container 2 of the weighing machine; i.e. when 54.35−49.75=4.6 kg of material are left in the container 2.

In such a way a weighing operation and a contemporaneous bag filling are obtained, without being compelled to use a hopper arranged between weighing and bagging machine. A great saving is therefore obtained in the height of the building and installation costs, because a net weight weighing device has to be installed at several metres from the ground and therefore must be supported by a framework provided with an access ladder and must be surrounded with a service platform so that the workers may carry out the required maintenance works around it with the necessary safety conditions.

Preferably the amount of discharge of the material from the container of the electronic weighing machine with fully open discharge valve is commensurate with the maximum output of the bagging machine for the relevant product to be handled, which bagging machine may be of any type.

When required, and to speed up the bagging times, between silo and bagging machine it is possible to install two containers 2 instead of one, controlled by the same electronic weighing device, so that when one container is discharged the other is loaded and vice versa.

**Claims**

1. Net weight weighing device for bagging machines comprising a weighing machine provided with a weighing container (2) and a discharge valve (3), characterized in that a material intercepting member (7), which is arranged at the bottom of a loading silo (6) and above the weighing container (2), is provided which is controlled by a microprocessor, in such a way that the weighing container (2) of the weighing machine (8, 10) is loaded with a quantity of material higher than that of a preset desired total weight, and the material is discharged in the bagging machine (1) through the valve (3), the discharge operation being also controlled during its entire cycle by the microprocessor, which after having stored the value of the weight of material existing in the weighing container (2) of the weighing machine (10), when a bag is present on the loading nozzle (9) of the bagging machine (1), causes full opening of the discharge valve (3) of the weighing container (2), and controls the weight reduction of the material in the weighing container, and, when the desired total weight of the material in the bag is nearly reached, causes first the partial closure and then the total closure of the valve (3) when the desired total weight is reached, said closure steps taking place as soon as the weight of the material discharged from the weighing container reaches the desired total weight minus predetermined quantities, which were determined in advance through tests made as a function of the type of material to be bagged and were stored in the microprocessor.

2. Weighing device according to Claim 1, characterized in that the weighing machine (8, 10) is of any known electronic type.

3. Weighing device according to Claims 1 and 2, characterized in that loading of the weighing container (2) of the weighing machine with the material coming from the silo (6) may be carried out either with a weight or a volume control system.

4. Weighing device according to Claims 1 and 2, characterized in that the amount of discharge of the material from the weighing container (2) of the electronic weighing machine (8, 10) with fully open discharge valve (3) is commensurate with the maximum output of the bagging machine (1) for the relevant product to be handled.

5. Weighing device according to Claims 1, 2, 3 and 4, characterized in that the system may be applied to any type and system of bagging machine.

6. Weighing device according to Claims 1, 2, 3, 4 and 5, characterized in that the kind of material intercepting member (7) arranged between the silo (6) and the weighing container (2) of the weighing machine (8, 10) as well as the kind of discharge valve (3) of the weighing container (2) may be of any known and conventional type.

**Patentansprüche**

1. Nettogewichtwägemaschine für Absackmaschinen, die eine, mit einem Behälter (2) und einem Ablassventil (3) ausgestattete Waage enthält, und durch die Tatsache gekennzeichnet ist, mit einem Füllgutsperrelement (7) versehen zu sein, das an der Unterseite eines Ladesilos (6) und über dem Behälter (2) angebracht ist und das von einem Mikroprozessor so kontrolliert wird, dass der Behälter (2) der Waage (8—10) mit einer grösseren Füllgutmenge als der des gewünschten vorbestimmten Gesamtgewichts aufgeladen und das Füllgut in die Absackmaschine (1) durch das Ventil (3) entladen wird; ein Mikroprozessor, der ebenfalls den Gesamtzyklus des Entladevorgangs kontrolliert, ruft, nach vorhergehender Einspeicherung des Gewichts des vorhandenen Füllgutes im Behälter (2) der Waage (10), gleichzeitig mit dem Vorhandenseins des Sackes auf der Düse (9) der Absackmaschine (1) die vollständige Öffnung des Ablassventils (3) des Behälters (2) der Waage hervor und kontrolliert die Verringerung des Füllgutgewichts in o.g. Behälter und ruft bei Annäherung an das Gesamtgewicht des Füllgutes im Sack zuerst die teilweise Schliessung des Ventils (3) und bei Erreichung des gewünschten Gesamtgewichts die völlige Schliessung des Ventils (3) hervor; die o.g. Schliessverfahren setzen sich in Gang sobald das Gewicht des vom Behälter entladenen Füllgutes das gewünschte Gesamtgewicht erreicht, weniger vorbestimmter Mengen, die vorher in Funktion zum Typ des Füllgutes, das abgefüllt werden soll, experimentell bestimmt und im Mikroprozessor gespeichert werden.

2. Wägemaschine gemäss Patentanspruch 1) und dadurch gekennzeichnet, dass die Waage (8—10) vom bekannten elektronisch betriebenen Typ ist.

3. Wägemaschine gemäss den Patentansprüchen 1) und 2) und die dadurch gekennzeichnet ist, dass das Auffüllen des Behälters (2) der Waage mit dem Füllgut aus dem Ladesilo (6) sowohl unter gewichtsmässiger als auch volumetrischer Kontrolle ausgeführt werden kann.

4) Wägemaschine gemäss den Patentansprüchen 1) und 2) und die dadurch gekennzeichnet ist, dass der Sinkdurchsatz des Füllgutes vom Behälter (2) der elektronischen Waage (8—10) bei völlig geöffnetem Durchlassventil (3) so bemessen ist, dass er dem Maximaldurchsatz der Absackmaschine (1) für das zu behandelnde Produkt entspricht.

5. Wägemaschine gemäss den Patentansprüchen 1), 2), 3) und 4) und die dadurch gekennzeichnet ist, dass das System an jeden Typ und an jedes System von Absackmaschinen angebracht werden kann.

6. Wägemaschine gemäss den Patentansprüchen 1), 2), 3), 4) und 5) und die dadurch gekennzeichnet ist, dass sowohl das Füllgutsperrelement (7), das zwischen dem Ladesilo (6) und dem Behälter (2) der Waage (8—10) angebracht ist, als auch das Ablassventil (3) jedem der bekannten Typen angehören können.

**Revendications**

1. Machine à peser à poids net pour ensacheuse, comprenant une balance munie d'un récipient (2) et d'une soupape de décharge (3) caractérisée par le fait de se composer d'un membre (7) de prise du produit, placé à la base d'un silo de chargement (6) et au-dessus du récipient (2), contrôlé par un microprocesseur de façon à charger le récipient (2) de la balance (8—10) d'une quantité de produit supérieure à celle d'une certaine pesée totale désirée et à décharger le produit dans l'ensacheuse (1) par la soupape (3). Pendant tout son cycle, l'opération de déchargement est contrôlée par un microprocesseur qui, après avoir mémorisé le poids de produit existant dans le récipient (2) de la balance (10) provoque, concomitamment avec la présence du sac sur la buse (9) de l'ensacheuse (1), l'ouverture complète de la soupape de décharge (3) du récipient (2) de la balance, contrôle la diminution de poids du produit dans ce même récipient et provoque—quand on arrive à proximité du poids total du produit dans le sac avant la fermeture partielle de la soupape (3) puis, au moment du poids désiré atteint, à la fermeture totale de la soupape (3)—ces opérations de fermeture s'effectuent dès que le poids du matériel déchargé dans le récipient atteint le total du poids désiré moins une certaine quantité fixée au préalable en fonction du type de produit à mettre en sachet; ces quantités seront mémorisées dans le microprocesseur.

2. Machine à peser selon la revendication 1, caractérisée par le fait que la balance (8—10) est type habituel à fonctionnement électronique.

3. Machine à peser selon les revendications 1 et 2, caractérisée par le fait que le remplissage du récipient (2) de la balance avec le produit provenant du silo (6) peut être effectué sous contrôle pondéral ou volumétrique.

4. Machine à peser selon les revendications 1 et 2, caractérisée par le fait que le débit de descente du produit provenant du récipient (2) de la balance électronique (8—10) avec la soupape de déharge (3) complètement ouverte, est calculé de façon à correspondre au débit maximum de l'ensacheuse (1) pour le produit devant être traité.

5. Machine à peser selon les revendications 1, 2, 3 et 4, caractérisée par le fait que le système peut être appliqué à n'importe quel type et n'importe quel système d'ensacheuse.

6. Machine à peser selon les revendications 1, 2, 3, 4 et 5, caractérisée par le fait que, soit en ce qui concerne le type de membre (7) d'interception du produit se trouvant entre le silo (6) et le récipient (2) de la machine à peser (8—10), soit en ce qui concerne la soupape de décharge (3) du récipient (2), peuvent être de n'importe quel type connu.

Fig. 1